# EUROPÄISCHE PATENTSCHRIFT

(11) **EP 1 827 938 B1**
(45) Veröffentlichungstag und Bekanntmachung des Hinweises auf die Patenterteilung: **11.02.2009**
(21) Anmeldenummer: 05819790.6
(22) Anmeldetag: 20.12.2005
(51) Int. Cl.: B60T 13/74, B60T 11/04, B60T 11/06, F16H 37/08

(54) **AKTUATOR FÜR DIE BETÄTIGUNG ZWEIER MECHANISCHER ORGANE**
ACTUATOR FOR THE OPERATION OF TWO MECHANICAL BODIES
ACTIONNEUR DESTINE A ACTIONNER DEUX ORGANES MECANIQUES

(30) Priorität: 20.12.2004 AT 9222004 U
(43) Veröffentlichungstag der Anmeldung: 05.09.2007
(73) Patentinhaber: Magna Powertrain AG & Co. KG, 8502 Lannach (AT)
(72) Erfinder: BERGHOFER, Alfred, A-7564 Dobersdorf (AT); SCHADLER, Werner, A-8430 Leibnitz (AT)
(74) Vertreter: Manitz, Finsterwald & Partner GbR
(86) Internationale Anmeldenummer: PCT/AT2005/000514
(87) Internationale Veröffentlichungsnummer: WO 2006/066295

(56) Entgegenhaltungen:
- DE-A1- 4 136 228
- FR-A- 2 720 045
- US-A- 4 817 463

## Beschreibung

Die Erfindung betrifft einen Aktuator für die Betätigung zweier Organe mittels Zugkräften, mit einer Kraftquelle und zwei um eine Achse gegensinnig rotierenden Teilen, wobei an beiden Teilen Zugelemente zur Betätigung der Organe angebunden sind, auf die entgegengesetzt gerichtete Zugkräfte wirken, zwischen denen ein Ausgleich stattfindet. Die Organe sind beispielsweise und insbesondere zwei den Rädern einer Achse zugeordnete Bremshebel einer Feststellbremse. Weil sie auf die beiden Räder einer Achse wirkt, ist ein Ausgleich der Zugkräfte erforderlich.

Aus der DE 10 2004 010 420 B4 ist ein gattungsgemäßer Aktuator für Feststellbremsen bekannt, welcher eine Stelleinheit zum Anziehen oder Lösen zweier Betätigungszüge einer Bremseinrichtung eines Fahrzeuges umfasst. Der dort beschriebene Aktuator weist einen motorischen Antrieb mit einem nachgeordneten Getriebe und zwei um eine Achse gegensinnig rotierende Übertragungselemente auf, an denen die Betätigungszüge angebunden sind. Das Getriebe ist durch ein einstufiges oder mehrstufiges Cyclogetriebe mit einem Hohlrad gebildet, das mit dem ersten Übertragungselement verbunden ist und an dessen Innenverzahnung sich eine Kurvenscheibe abwälzt, wobei die Kurvenscheibe eine exzentrische Drehbewegung ausführt. Eine Mitnehmerscheibe greift mit Bolzen in zugeordnete Bohrungen der Kurvenscheibe ein, so dass eine Drehbewegung der Kurvenscheibe auf die Mitnehmerscheibe übertragen wird und eine an der Mitnehmerscheibe drehfest angeordnete Abtriebswelle des Getriebes koaxial zu der Antriebswelle des Getriebes angeordnet ist. An der Abtriebswelle des Getriebes ist das zweite Übertragungselement drehfest angeordnet.

Aus der US 4,795,002 ist ein Aktuator bekannt, bei dem auf einem der gegensinnig rotierenden Teile ein Elektromotor mit einem hoch untersetzenden Schneckengetriebe sitzt und mit einem Ritzel auf den anderen der gegensinnig rotierenden Teile wirkt. An beide Teile ist jeweils ein Zugmittel angebunden. Dabei muss die Energiezufuhr zum Motor über eine biegsame Leitung erfolgen, die Reibungsverluste sind hoch und der Zahneingriff ist ungünstig, vor allem wenn man den Zugmitteln erhebliche Kräfte auszuüben sind. Dadurch dass sich beide rotierenden Teile auch bei stillstehendem Motor gleichsinnig bewegen können, erfolgt der Kraftausgleich zwischen den beiden Zugmitteln.

Aus der JP 07-332448 AA ist ein sonnenradloses Planetengetriebe mit zwei Hohlrädern bekannt, von denen eines mit dem Gehäuse und eines mit einer Abtriebswelle und der Planetenträger mit der Eingangswelle drehfest verbunden ist. Es handelt sich somit um ein einfaches Übersetzungsgetriebe.

Es ist Aufgabe der Erfindung, einen gattungsgemäßen Aktuator zu schaffen, der die angeführten Nachteile vermeidet. Er soll bei kleinen Einbaumaßen möglichst ohne parasitäre Kräfte möglichst große Kräfte auf die Zugmittel ausüben, mit einem Minimum an Reibungsverlusten und Verschleiss.

Erfindungsgemäß wird das durch einen Aktuator mit den Merkmalen des Anspruchs 1 erreicht. Bei diesem Aktuator sind die gegensinnig rotierenden Teile ein erster und ein zweiter Ring mit Innenverzahnung, welche jeweils mit einer verzahnten Zone von Zahnelementen kämmen, die mit der Kraftquelle wirkverbunden sind, wobei die Verhältnisse der Zähnezahlen einer Innenverzahnung und der zugehörigen verzahnten Zone verschieden sind. So sind die Ringe miteinander gekoppelt; sie können sich zum Ausgleich der Wege beziehungsweise Kräfte der beiden Zugmittel gleichsinnig - wenn auch um verschiedene Winkel verdrehen; werden die Zahnelemente in Umlauf gebracht, so werden die beiden Ringe dank der unterschiedlichen Verhältnisse der Zähnezahlen gegensinnig verdreht. Dadurch wirken keine (parasitären) Kräfte auf das Gehäuse, in dem die rotierenden Teile gelagert sind, und auf die Verzahnungen der Ringe und der Zahnelemente wirkt jeweils nur das halbe Drehmoment.

Dazu kommt, dass beim Kämmen eines Zahnelementes mit einer Innenverzahnung sehr viele Zähne im Eingriff sind und folglich hohe Kräfte sicher übertragen werden können. Da es ja nur auf die Differenz zwischen den Verhältnissen der Zähnezahlen ankommt, können für die Zahnelemente ein relativ großer Durchmesser gewählt werden, was den Eingriffsverhältnissen weiter zugute kommt. Schließlich erlauben die unterschiedlichen Verhältnisse der Zähnezahlen eine sehr große Untersetzung, die ein eigenes Untersetzungsgetriebe überflüssig macht. Somit kann ein schnelllaufender und daher sehr kleiner Elektromotor direkt ohne Untersetzungsgetriebe verwendet werden.

Die Zahnelemente können im Rahmen der Erfindung nicht nur verschieden groß, sondern überhaupt sehr verschieden ausgebildet sein. Sie können im Extremfall ein einziges biegsames Band sein, das in der Art eines Wellengetriebes (engl.: "Harmonic Drive") von einem von der Kraftquelle angetrieben umlaufenden Exzenter in die Innenverzahnung der gegensinnig drehbaren Ringe gedrückt wird.

In einer bevorzugten Ausführungsform der Erfindung besteht ein Zahnelement aus zwei drehfest miteinander verbundenen oder einstückigen Zahnrädern, deren jedes eine verzahnte Zone bildet, und sind die Zahnräder die Planetenräder eines sonnenradlosen Planetengetriebes, die auf Achsen eines mit der Kraftquelle drehfest verbundenen Planetenträgers frei drehbar sind (Anspruch 2). Diese Bauweise entspricht einem durch Wegfall eines Sonnenrades reduziertem Planetengetriebe, bei dem der Antrieb von der Kraftquelle über den Planetenträger erfolgt und zwei Hohlräder - das sind die gegensinnig rotierenden Teile - die Abtriebsglieder sind. Bei Planetengetrieben besteht im Rahmen der kinematischen Äquivalenz großer Gestaltungsspielraum, bei der Wahl der Durchmesser der Planetenräder und des Durchmessers der Lagerzapfen am Planetenträger.

In der Art eines Planetengetriebes können mehrere Zahnelemente über den Umfang verteilt sein. In einer besonders einfachen Bauform ist der Planetenträger eine in einem Gehäuse gelagerte Exzenterwelle, auf deren exzentrischem Teil nur ein Zahnelement frei drehbar gelagert ist (Anspruch 3). So kann der Durchmesser des Zahnelementes beinahe beliebig groß und die Exzentrizität der Exzenterwelle beliebig klein gewählt werden.

In Weiterbildung der Erfindung ist der Planetenträger mit einem Elektromotor drehfest verbunden und in einem gemeinsamen Gehäuse (Anspruch 4). So erhält man eine besonders einfache und raumsparende Bauweise.

In einer vorteilhaften Ausbildung ist zur Anbindung der Zugelemente am äusseren Rand des ersten und des zweiten Ringes mit Innenverzahnung jeweils ein Block zur Verankerung des einen Ende des Zugmittels vorgesehen (Anspruch 5) und sind im Gehäuse Anschläge vorgesehen, die den Verdrehwinkel jedes der beiden gegensinnig rotierenden Teile begrenzen (Anspruch 6). Ersteres erlaubt es, die Zugmittel aus dem Gehäuse herauszuführen, zweiteres bewahrt vor Schaden, wenn eines der Zugmittel reisst. So nimmt das Gehäuse die Gegenkraft zu der auf das nicht gerissene Zugmittel wirkenden Kraft auf, der Betätigungsweg vergrößert sich dann etwas.

Ein Vorteil der Erfindung besteht darin, dass einer der beiden Ringe mit Innenverzahnung und die mit diesem kämmende verzahnte Zone des Zahnelementes verdoppelt sind, sodass zwei identische Ringe beiderseits des anderen Ringes und zwei identische verzahnten Zonen beiderseits der anderen verzahnten Zone angeordnet sind, und dass jeder der beiden identischen Ringe einen Block hat, wobei das zugehörige Zugelement über einen Waagebalken an die beiden Blöcke angebunden ist. Durch die Verdoppelung und die Anbindung des zugehörigen Zugmittels über den Waagebalken wirken die von den Zugmitteln ausgeübten Kräfte in einer Ebene, sodass im und auf den Aktuator keine Kippmomente wirken. Dadurch ergibt sich eine einfachere Lagerung und eine reduzierte Belastung und Abnutzung der Verzahnungen.

Vorzugsweise ist der verdoppelte Ring der Ring mit der größeren Zähnezahl beziehungsweise mit dem größeren Durchmesser (Anspruch 7). Dadurch ist der Aktuator einfach zusammenbaubar. Vor allem, wenn ein ihn umgebendes Gehäuse geteilt ist.

In einer perfektionierten Ausführungsform bilden die beiden identischen Ringe selbst das Gehäuse, welches für die Anbindung des Zugmittel an den nicht verdoppelten Ring einen Umfangsschlitz aufweist (Anspruch 8). So wird der Aktuator besonders einfach und billig. Für einen einfachen Zusammenbau ist das Gehäuse in einer achsnormalen Ebene geteilt (Anspruch 9).

Im Folgenden wird die Erfindung anhand von Abbildungen beschrieben und erläutert. Es stellen dar:
- Fig. 1: Eine schematische Skizze einer Fahrzeugachse mit dem erfindungsgemäßen Aktuator,
- Fig. 2: Ein Schema eines Aktuators (keine Ausführungsform der Erfindung),
- Fig. 3: Wie Fig. 2, axonometrisch,
- Fig. 4: Ein Schema zur Erläuterung der Funktion,
- Fig. 5: Eine Ausführungform der Erfindung in einer Schnittansicht,
- Fig. 6: Wie Fig. 5, axonometrisch.

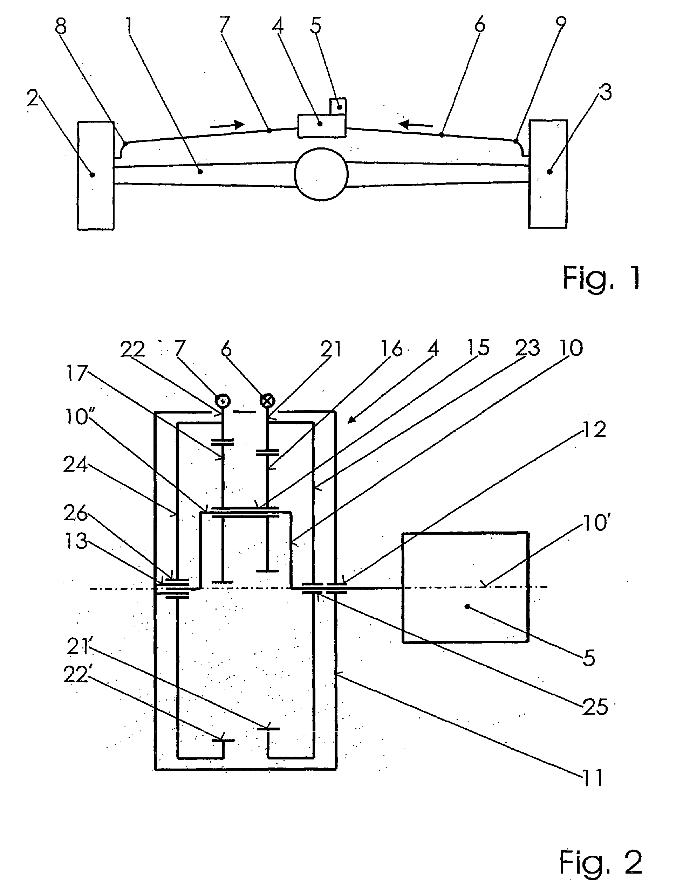

In **Fig.1** ist die Achse eines Kraftfahrzeuges angedeutet und mit 1 bezeichnet, ihr linkes Rad mit 2 und ihr rechtes Rad mit 3. Von einem erfindungsgemäßen Aktuator 4 mit einer Kraftquelle 5 führen Zugmittel (Drahtseile oder Bowdenzüge) 6,7 zu den zu betätigenden Organen, hier Bremshebel 8,9, mit denen nicht dargestellte Radbremsen möglichst gleichzeitig und mit derselben Kraft betätigt werden.

In **Fig. 2** schließt an die Kraftquelle, hier ein Elektromotor 5, unmittelbar eine Exzenterwelle 10 an, die als Planetenträger fungiert. Die Exzenterwelle 10 ist bezüglich eines nicht drehbaren Gehäuses 11 in Lagern 12, 13 gelagert. Ihre Achse und somit die Hauptachse des Aktuators 4 ist mit 10' bezeichnet, deren exzentrische Achse mit 10". Auf dieser exzentrischen Achse 10" ist ein Zahnelement 15 drehbar gelagert. Es besteht hier aus einem ersten Zahnrad 16 und einem zweiten Zahnrad 17, welche drehfest miteinander verbunden sind. Allgemeiner ausgedrückt besteht das Zahnelement 15 aus einer ersten verzahnten Zone 16 und einer zweiten verzahnten Zone 17, wovon die erste Zone (16) mit einem ersten Ring mit Innenverzahnung 21 und die zweite Zone (17) mit einem zweiten Ring mit Innenverzahnung 22 kämmt. Die Innenverzahnungen sind mit 21', 22' bezeichnet. Die Ringe 21, 22 sind jeweils über eine Scheibe 23, 24 und Lager 25, 26 im Gehäuse 11 gelagert. Somit bildet der Aktuator ein sonnenradloses Planetengetriebe. Bestehend aus einem Planenträger 10, einem oder einer Anzahl auf dem Umfang verteilter Doppelplanetenräder 16,17 und zwei Hohlrädern 21,22.

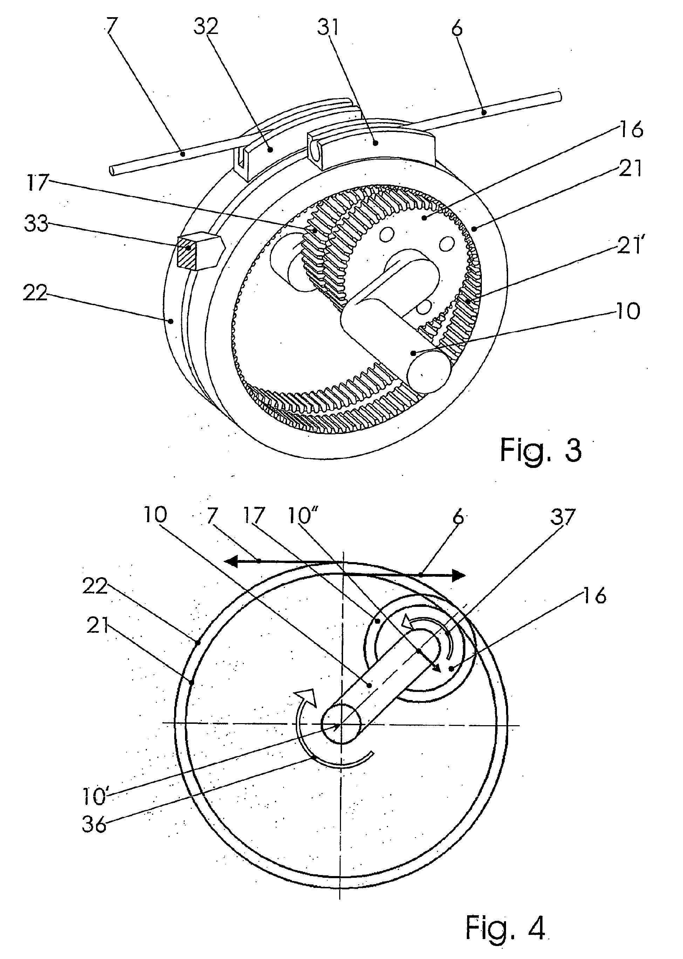

In **Fig. 3** ist das Gehäuse 11 weggelassen. Man erkennt, dass die Zugmittel 6, 7 über Ankerblöcke 31, 32 jedes mit einem rotierenden Ring 21, 22 verbunden sind, wobei die Ankerblöcke 31,32 am äusseren Umfang der Ringe 21,22 befestigt sind. Weiters ist ein gehäusefester Anschlag 33 angedeutet. Ein zweiter solcher Anschlag ist unsichtbar und dem zweiten Ring 22 zugeordnet. Diese Anschläge 33 stellen auch nach dem Abreißen eines der beiden Drahtseile 6, 7 die Einwirkung des Aktuators auf das nicht gerissene Zugmittel sicher.

Anhand der **Fig. 4** wird im Folgenden die Funktion des Aktuators erklärt. Es ist wesentlich, dass sich die Verhältnisse der Zähnezahlen der Innenverzahnung 21' des einen Ringes 21 zur Zähnezahl des zugehörigen Zahnrades 16 von dem Verhältnis der Zähnezahlen des zweiten Ringes 22 und des zweiten Zahnrades 17 unterscheidet. Das kann im Rahmen der Erfindung durch verschiedene Maßnahmen erreicht werden, im dargestellten Ausführungsbeispiel wird es durch verschiedene Zähnezahlen bei gleicher Zahngeometrie erreicht. Dadurch unterscheiden sich die Radien der beiden Ringe 21, 22 und der beiden Zahnräder 16, 17. Zum Verständnis des Grundprinzipes stelle man sich vor, die Exzenterwelle 10 stehe still und das Zahnelement 15 drehe sich. Durch die verschiedenen Übersetzungen der beiden jeweils kämmenden Verzahnungen drehen sich die beiden Ringe 21, 22 um verschiedene Zentriwinkel im gleichen Drehsinn.

Soll auf die beiden Zugelemente 6, 7 eine Zugkraft ausgeübt werden, so wird der Elektromotor 5 und mit ihm die Exzenterwelle 10 in Drehung versetzt. Diese nimmt über das Zahnelement 15 (reibungsbedingt) die beiden Ringe 21, 22 mit, bis eines der beiden Zugelemente 6, 7 gespannt ist und so einem Drehen des jeweiligen Ringes 21,22 entgegenwirkt. Nun beginnen sich die Zahnräder 16, 17 an den zugehörigen Ringen 21, 22 mit Innenverzahnung 21', 22' abzuwälzen. Die verschiedenen Übersetzungen der beiden jeweils kämmenden Verzahnungen erzwingen so eine Relativbewegung der beiden Ringe 21,22 in entgegengesetzter Richtung. Diese Relativbewegung entsteht durch die unterschiedlichen Übersetzungen bzw. Zähnezahlen der beiden Zahnradpaarungen.

Je kleiner der Unterschied zwischen den beiden Untersetzungen beziehungsweise Zähnezahlen, desto größer ist die Gesamtuntersetzung zwischen dem Elektromotor und den beiden Ringen. Dieser Unterschied kann so klein gewählt werden, dass ein schnelllaufender Elektromotor ohne ein Untersetzungsgetriebe direkt mit dem Aktuator gekuppelt sein kann, was in dem beschriebenen Ausführungsbeispiel auch der Fall ist.

Sollen Längenunterschiede der beiden Zugelemente 6, 7 sich selbsttätig und ohne Beaufschlagung des Elektromotors 5 ausgleichen, so werden sie durch Verdrehen der beiden Ringe 21, 22 im selben Drehsinn und deren Koppelung über die beiden Zahnräder 16, 17 automatisch ausgeglichen. Dabei kann der Elektromotor stillstehen. Für die Drehung um die Hauptachse 10' ist in Fig. 4 ein Geschwindigkeitspfeil 36 und für die Drehung des Zahnelementes 15 um die exzentrische Achse 10" ein Geschwindigkeitspfeil 37 eingezeichnet.

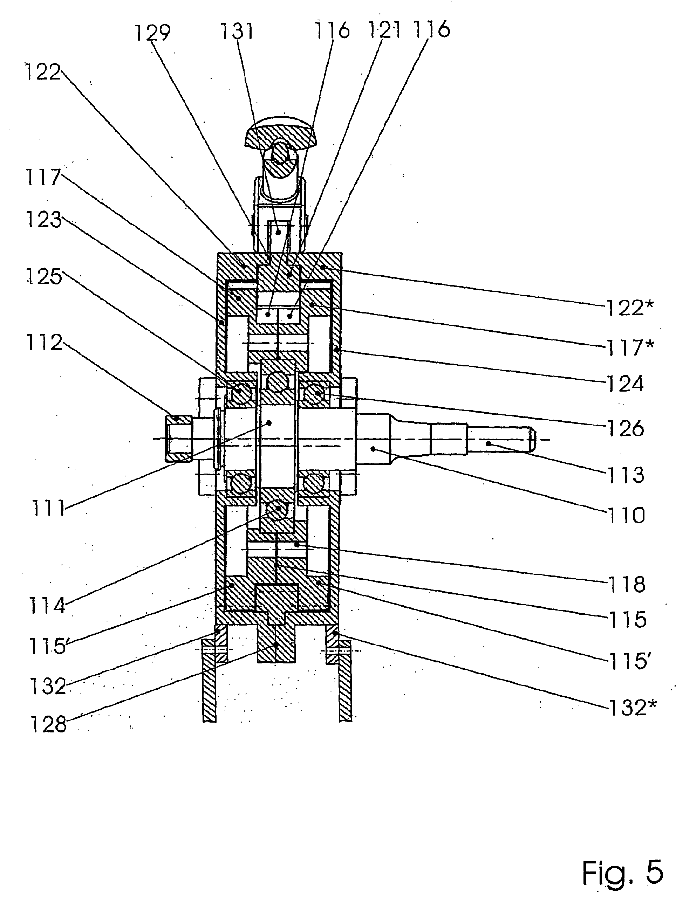

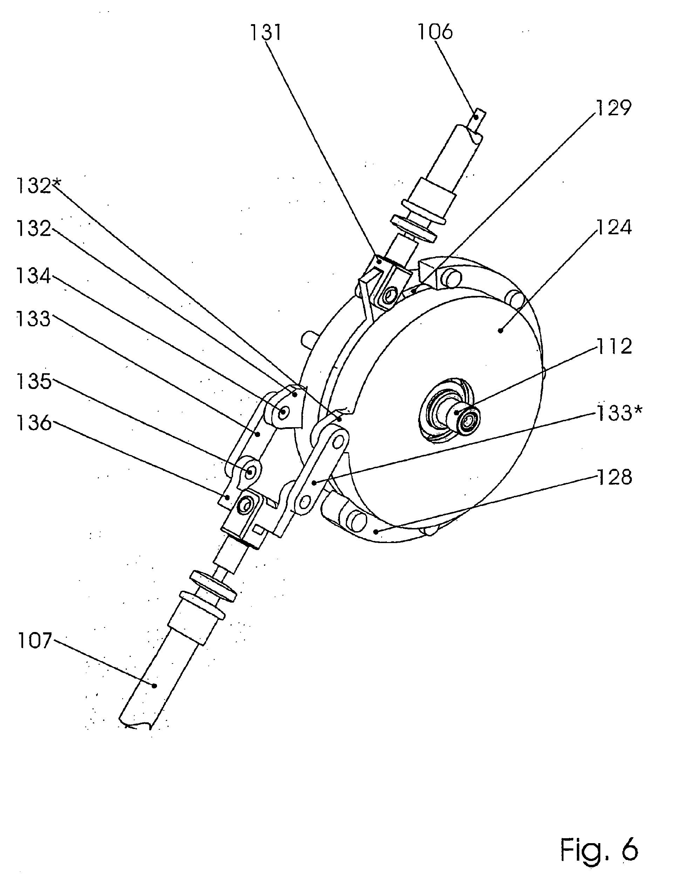

In der Ausführungsvariante der **Fig. 5** und **6** liegen die Zugelemente 106,107 in einer zur Exzenterwelle 110 normalen Ebene. Sie üben somit auf diese keine Kippmomente aus. Die Exzenterwelle 110 ist über einen Stummel 113 mit einem nicht dargestellten Elektromotor antriebsverbunden und gemeinsam mit dessen Rotor gelagert und an ihrem anderen Ende in einem Lager 112 abgestützt. Ihr Exzenter 111 versetzt über ein erstes Kugellager 114 ein Zahnelement 115 in eine Planetenbewegung. Das Zahnelement 115 ist hier in zwei Hälften 115' und 115" geteilt, die mittels Stiften 118 fest miteinander verbunden sind. Es hat in der Längsmitte eine erste verzahnte Zone 116 kleineren Durchmessers und beiderseits je eine zweite verzahnte Zone 117, 117* größeren Durchmessers.

Die erste verzahnte Zone 116 kämmt mit einem ersten innenverzahnten Ring 121 kleineren Durchmessers, die zweiten verzahnten Zonen 117, 117* kämmen jeweils mit einem zweiten innenverzahnten Ring 122, 122* größeren Durchmessers. Die beiden zweiten innenverzahnten Ringe 122, 122* sind drehfest miteinander verbunden. Durch die Planetenbewegung des Zahnelementes 115 und wegen der verschiedenen Durchmesser der verzahnten Zonen 116 und 117, 117* werden die zweiten innenverzahnten Ringe 122, 122* gegenüber dem ersten innenverzahnten Ring 121 verdreht. Dabei ist die Differenz zwischen dieser Relativdrehung und der Drehzahl der Exzenterwelle 111 erheblich und es sind mit einem relativ schwachen Motor sehr hohe Kräfte an den Zugelementen erzielbar. Erstere haben an ihren einander abgekehrten Seiten Scheiben 123,124, die mittels zweiter Kugellager 125,126 auf der Exzenterwelle 110 gelagert sind.

Die zweiten innenverzahnten Ringe 122, 122* mit ihren Scheiben sind einzelne Gleichteile, die mittels äusserer Flansche 128 miteinander verbunden, vorzugsweise verschraubt, sind. An einem Teil des Umfanges sind die Flansche 128 unterbrochen und geben einen Schlitz 129 frei, durch den ein vom ersten innenverzahnten Ring 121 abstehender erster Ankerblock 131 heraus ragt. An diesem greift das erste Zugelement 106 an. An den Scheiben 123,124 der beiden zweiten innenverzahnten Ringe 122, 122* sind zweite Ankerblöcke 132, 132* angebracht, die jeweils über Gelenkbolzen 134,135 und Laschen 133 mit einem Waagbalken 136 verbunden sind. In dessen (136) Mitte greift das zweite Zugelement 107 an. Auf diese Weise wird die vom Drahtseil ausgeübte Zugkraft symmetrisch auf die beiden zweiten innenverzahnten Ringe 122, 122* verteilt.

In dem beschriebenen Ausführungsbeispiel hat der erste innenverzahnte Ring 121 den kleineren und haben die zweiten innenverzahnten Ringe 122, 122* den größeren Durchmesser. Ebenso gut könnte umgekehrt der erste innenverzahnte Ring 121 den größeren Durchmesser haben. Überhaupt kann im Rahmen der Erfindung in vielen Details von den beschriebenen Ausführungsbeispielen abgewichen werden. So können etwa die Zahnelemente ganz anders und ihre Verzahnung sehr verschieden gestaltet sein. Durch entsprechende Wahl der Durchmesser und Zähnezahlen kann eine hohe bis sehr hohe Übersetzung erreicht werden.

## Patentansprüche

1. Aktuator für die Betätigung zweier Organe (8, 9) mittels Zugkräften, mit einer Kraftquelle (5) und zwei um eine Achse gegensinnig rotierenden Teilen (121, 122, 122*), wobei an beiden Teilen Zugelemente (106, 107) zur Betätigung der Organe (8, 9) angebunden sind, auf die entgegengesetzt gerichtete Zugkräfte wirken, zwischen denen ein Ausgleich stattfindet, wobei einer der beiden gegensinnig rotierenden Teile ein erster Ring (121) mit einer Innenverzahnung ist, welcher mit einer ersten verzahnten Zone (116) eines Zahnelements (115) kämmt, das mit der Kraftquelle (5) wirkverbunden ist, **dadurch gekennzeichnet, dass** auch der zweite Teil ein Ring (122, 122*) mit einer Innenverzahnung ist, welcher mit einer zweiten verzahnten Zone (117, 117*) des Zahnelements (115) kämmt, wobei das Verhältnis der Zähnezahlen der Innenverzahnung des ersten Rings (121) und der zugehörigen ersten verzahnten Zone (116) und das Verhältnis der Zähnezahlen der Innenverzahnung des zweiten Rings (122, 122*) und der zugehörigen zweiten verzahnten Zone (117, 117*) verschieden sind, wobei einer der beiden Ringe mit Innenverzahnung und die mit diesem kämmende verzahnte Zone des Zahnelements (115) verdoppelt sind, sodass zwei identische Ringe (122, 122*) beiderseits des anderen Ringes (121) und zwei identische verzahnten Zonen (117, 117*) beiderseits der anderen verzahnten Zone (116) angeordnet sind, und wobei jeder der beiden identischen Ringe (122, 122*) einen Block (132, 132*) hat, wobei das zugehörige Zugelement (107) über einen Waagebalken (136) an die beiden Blöcke (132, 132*) angebunden ist.

2. Aktuator nach Anspruch 1, **dadurch gekennzeichnet, dass** das Zahnelement (115) aus zwei drehfest miteinander verbundenen oder einstückigen Zahnrädern (116,117,117*) besteht, deren jedes eine verzahnte Zone bildet, und dass die Zahnräder (116, 117, 117*) Planetenräder eines sonnenradlosen Planetengetriebes sind, die auf Achsen eines mit der Kraftquelle (5) drehfest verbundenen Planetenträgers (111) frei drehbar sind.

3. Aktuator nach Anspruch 2, **dadurch gekennzeichnet, dass** der Planetenträger (111) eine in einem Gehäuse (124) gelagerte Exzenterwelle ist, deren exzentrischer Teil eine Achse für die Zahnelemente (115) bildet.

4. Aktuator nach Anspruch 2 oder 3, **dadurch gekennzeichnet, dass** der Planetenträger (111) mit einem Elektromotor (5) drehfest verbunden und in einem gemeinsamen Gehäuse (124) des Aktuators untergebracht ist.

5. Aktuator nach einem der Ansprüche 1 bis 4, **dadurch gekennzeichnet, dass** am äusseren Rand des nicht verdoppelten Ringes (121) ein Block (131) zur Verankerung des zugehörigen Zugmittels (106) vorgesehen ist.

6. Aktuator nach einem der Ansprüche 1 bis 5, **dadurch gekennzeichnet, dass** in einem Gehäuse des Aktuators Anschläge vorgesehen sind, die den Verdrehwinkel jedes der beiden gegensinnig rotierenden Ringe begrenzen.

7. Aktuator nach einem der Ansprüche 1 bis 6, **dadurch gekennzeichnet, dass** die beiden identischen Ringe (122, 122*) eine größere Zähnezahl oder einen größeren Durchmesser als der andere Ring (121) haben.

8. Aktuator nach einem der Ansprüche 1 bis 7, **dadurch gekennzeichnet, dass** die beiden identischen Ringe (122, 122*) selbst ein Gehäuse (124) bilden, welches für die Anbindung des Zugmittels (106) an den nicht verdoppelten Ring (121) einen Umfangsschlitz (129) aufweist.

9. Aktuator nach Anspruch 8, **dadurch gekennzeichnet, dass** das Gehäuse (124) in einer achsnormalen Ebene geteilt ist.

## Claims

1. An actuator for the actuation of two members (8, 9) by means of pulling forces, having a power source (5) and two parts (121, 122, 122*) rotating in opposite senses around an axis, wherein pulling elements (106, 107) for the actuation of the members (8, 9) are tied to both parts, on which the oppositely directed pulling forces act between which a compensation takes place, wherein one of the two parts rotating in opposite senses is a first ring (121) with an inner toothed arrangement, said ring meshing with a first toothed zone (116) of a toothed element (115) operatively connected to the power source (5),
**characterized in that** the second part is also a ring (122, 122*) having an inner toothed arrangement which meshes with a second toothed zone (117, 117*) of the toothed element (115), with the ratio of the numbers of teeth of the inner toothed arrangement of the first ring (121) and of the associated first toothed zone (116) and the ratio of the numbers of teeth of the inner toothed arrangement of the second ring (122, 122*) and of the associated second toothed zone (117, 117*) being different, with one of the two rings with an inner toothed arrangement and the toothed zone of the toothed element (115) meshing therewith being doubled so that two identical rings (122, 122*) are arranged at both sides of the other ring (121) and two identical toothed zones (117, 117*) are arranged at both sides of the other toothed zone (116), and with each of the two identical rings (122, 122*) having a block (132, 132*), with the associated pulling element (107) being tied to the two blocks (132, 132*) via an arm (136) of a balance.

2. An actuator in accordance with claim 1, **characterised in that** the toothed element (115) is made of two toothed wheels (116, 117, 117*) which are rotationally fixedly connected to one another or are in one piece and of which each forms a toothed zone; and **in that** the toothed wheels (116, 117, 117*) are planetary gears of a planetary transmission without a sun gear, said planetary gears being freely rotatable on axles of a planet carrier rotationally fixedly connected to the power source (5).

3. An actuator in accordance with claim 2, **characterised in that** the planet carrier (111) is an eccentric shaft which is journalled in a housing (124) and whose eccentric portion forms an axle for the toothed elements (115).

4. An actuator in accordance with claim 2 or claim 3, **characterised in that** the planet carrier (111) is rotationally fixedly connected to an electric motor (5) and is accommodated in a common housing (124) of the actuator.

5. An actuator in accordance with any one of the claims 1 to 4, **characterised in that** a block (131) for the anchorage of the associated pulling means (106) is provided at the outer rim of the non-doubled ring (121).

6. An actuator in accordance with any one of the claims 1 to 5, **characterised in that** abutments which limit the angle of rotation of each of the two rings rotating in opposite senses are provided in a housing of the actuator.

7. An actuator in accordance with any one of the claims 1 to 6, **characterised in that** the two identical rings (122, 122*) have a larger number of teeth or have a larger diameter than the other ring (121).

8. An actuator in accordance with any one of the claims 1 to 7, **characterised in that** the two identical rings (122, 122*) themselves form a housing (124) which has a peripheral slot (129) for the tying of the pulling means (106) to the non-doubled ring (121).

9. An actuator in accordance with claim 8, **characterised in that** the housing (124) is divided in a plane normal to the axis.

## Revendications

1. Actionneur pour l'actionnement de deux organes (8, 9) au moyen de forces de traction, avec une source de force (5) et deux pièces (121, 122, 122*) en rotation en sens contraire autour d'un axe, dans lequel sur les deux pièces sont raccordées des éléments de traction (106, 107) pour l'actionnement des organes (8, 9), sur lesquels agissent des forces de traction orientées en sens opposé, entre lesquelles se produit une compensation, et l'une des deux pièces en rotation en sens contraire est une première bague (121) avec une denture intérieure, qui engrène avec une première zone dentée (116) d'un élément denté (115) qui est relié en termes d'action à la source de force (5),
**caractérisé en ce que** la deuxième pièce également est une bague (122, 122*) avec une denture intérieure qui engrène avec une seconde zone dentée (117, 117*) de l'élément denté (115), le rapport du nombre de dents de la denture intérieure de la première bague (121) et de la première zone dentée associée (116), et le rapport du nombre de dents de la denture intérieure de la seconde bague (122, 122*) et de la seconde zone dentée associée (117, 117*) sont différents, dans lequel l'une des deux bagues avec denture intérieure et la zone dentée de l'élément denté (115) qui engrène avec celle-ci sont prévues en double, de sorte que deux bagues identiques (122, 122*) sont agencées des deux côtés de l'autre bague (121) et deux zones dentées identiques (117, 117*) sont agencées des deux côtés de l'autre zone dentée (116), et chacune des deux bagues identiques (122, 122*) possède un bloc (132, 132*), l'élément de traction associé (107) étant relié aux deux blocs (132, 132*) via une poutre de balance (136).

2. Actionneur selon la revendication 1, **caractérisé en ce que** l'élément denté (115) est constitué de deux roues dentées reliées solidairement l'une à l'autre ou réalisées d'une seule pièce (116, 117, 117*), dont chacune forme une zone dentée, et **en ce que** les roues dentées (116, 117, 117*) sont les roues planétaires d'une transmission à planétaires dépourvue de roue solaire, qui sont en rotation libre sur des axes d'un porte-planétaires (111) relié solidairement en rotation à la source de force (5).

3. Actionneur selon la revendication 2, **caractérisé en ce que** le porte-planétaires (111) est un arbre excentrique monté dans un boîtier (124), dont la partie excentrique forme un axe pour les éléments dentés (115).

4. Actionneur selon la revendication 2 ou 3, **caractérisé en ce que** le porte-planétaires (111) est relié solidairement en rotation à un moteur électrique (5) et est logé dans un boîtier commun (124) de l'actionneur.

5. Actionneur selon l'une des revendications 1 à 4, **caractérisé en ce qu'**à la bordure extérieure de la bague non doublée (121), il est prévu un bloc (131) pour l'ancrage de l'organe de traction associé (106).

6. Actionneur selon l'une des revendications 1 à 5, **caractérisé en ce que** des butées sont prévues dans un boîtier de l'actionneur, qui limitent l'angle de rotation de chaque bague ou des deux bagues tournant entre en sens opposé.

7. Actionneur selon l'une des revendications 1 à 6, **caractérisé en ce que** les deux bagues identiques (122, 122*) possèdent un nombre de dents plus élevé ou un plus grand diamètre que l'autre bague (121).

8. Actionneur selon l'une des revendications 1 à 7, **caractérisé en ce que** les deux bagues identiques (122, 122*) forment elles-mêmes un boîtier (124) qui présente une fente périphérique (129) pour la jonction de l'organe de traction (106) à la bague (121) qui n'est pas doublée.

9. Actionneur selon la revendication 8, **caractérisé en ce que** le boîtier (124) est subdivisé dans un plan perpendiculaire à l'axe.
